**Europäisches Patentamt**

**European Patent Office**

**Office européen des brevets**

(19)

(11) Veröffentlichungsnummer: **0 121 193**
**B1**

(12) # EUROPÄISCHE PATENTSCHRIFT

(45) Veröffentlichungstag der Patentschrift:
**10.08.88**

(51) Int. Cl.⁴: **B 60 C 27/06,** B 60 C 27/14

(21) Anmeldenummer: **84103214.7**

(22) Anmeldetag: **23.03.84**

(54) **Gleitschutzkette für Fahrzeugräder, insbesondere Spurkreuzkette, und Verfahren zu deren Herstellung.**

(30) Priorität: **31.03.83 DE 3311765**
**09.03.84 DE 3408690**

(43) Veröffentlichungstag der Anmeldung:
**10.10.84 Patentblatt 84/41**

(45) Bekanntmachung des Hinweises auf die Patenterteilung:
**10.08.88 Patentblatt 88/32**

(84) Benannte Vertragsstaaten:
**AT BE CH DE FR LI LU NL**

(56) Entgegenhaltungen:
**EP-A-0 081 792**
**US-A-1 600 172**

(73) Patentinhaber: **Firma August Thiele, Werkstrasse 3,
D-5860 Iserlohn- Kalthof (DE)**

(72) Erfinder: **Der Erfinder hat auf seine Nennung
verzichtet**

(74) Vertreter: **Schwarz, Klaus- Jürgen, Dipl.- Ing.,
Gluckstrasse 7, D-5300 Bonn 1 (DE)**

## Beschreibung

Die Erfindung betrifft eine Gleitschutzkette für Fahrzeugräder nach dem Oberbegriff des Anspruches 1 und bezieht sich ferner auf Verfahren zum Herstellen derartiger Gleitschutzketten.

Bei Gleitschutzketten mit einem an der Reifeninnenseite angeordneten, an einer Stelle offenen, durch einen Hakenverschluß schließbaren Haltering aus Federstahldraht können sich bei der Montage am Fahrzeugrad mitunter insofern Schwierigkeiten ergeben, als der Hakenverschluß bzw. die Hakenverbindung beim Schließen hinter dem Reifen unsichtbar ist, so daß der Verschlußhaken nicht ausreichend sicher in die Verriegelungsstellung an der Verschlußöse gebracht werden kann. Beim Montieren von Gleitschutzketten mit einem Trichterverschluß kann es zudem bei größerer Schneehöhe auf der Fahrbahn auch mitunter zu Verstopfungen des Trichterverschlusses kommen.

Ferner hat es sich bei der Herstellung von Gleitschutzketten mit einem in Einführrichtung des Trichterverschlusses unter Vorspannung stehenden Federstahlring gezeigt, daß ein beträchtlicher Montageaufwand erforderlich ist, um die einzelnen Gleitschutzketten aus dem Haltering, den Verschlußteilen, den auf den Haltering aufgereihten Netzteilen der Kette und den die Netzteile in gleichmäßigem Abstand haltenden Schlauchstücken oder Distanzhülsen zusammenzubauen.

Der Erfindung liegt die Aufgabe zugrunde, Gleitschutzketten nach dem Oberbegriff des Anspruches 1 in einfacher Weise ohne einen besonderen zusätzlichen konstruktiven Aufwand dahingehend zu verbessern, daß der Verschlußhaken beim Einführen in die Verschlußöse stets von selbst sicher in die Verriegelungsstellung gelangt. Ein weiteres Ziel ist dabei, eine derartige Gleitschutzkette mit einem Trichterverschluß aus einer möglichst geringen Anzahl von Einzelteilen so auszubilden, daß sie in besonders einfacher Weise zusammengebaut werden kann.

Diese Aufgabe wird gemäß der Erfindung im wesentlichen durch den Kennzeichnungsteil des Anspruches 1 gelöst, während in den Ansprüchen 2 bis 10 besonders vorteilhafte Weiterbildungen der Erfindung gekennzeichnet sind und die Ansprüche 11 und 12 besonders vorteilhafte Verfahren zur Herstellung derartiger Gleitschutzketten beinhalten.

Aus der US-A-16 00 172 ist zwar bereits eine Vorrichtung zum automatischen Auflegen von Gleitschutzketten mit innerer und äußerer Seitenkette auf Fahrzeugräder bekannt mit einer Art Hakenverschluß, der jedoch in der Form, wie er in der US-A-16 00 172 dargestellt ist, kaum funktionsfähig sein dürfte. Zu Beginn des Auflegevorganges muß zunächst ein tüllenartiges Ösenteil am vorderen Ende der Gleitschutzkette mittels eines seitlichen Hakens mit von der Radfelge seitlich hervorstehenden Zapfen zum Eingriff gebracht werden, damit die Gleitschutzkette durch Drehung des Rades um den Reifenumfang so weit herumgelegt werden kann, bis ein am gegenüberliegenden Ende der Gleitschutzkette vorhandenes Hakenteil zum Eingriff in das Ösenteil gebracht werden kann. Das Hakenteil muß dabei an einer Schenkelfeder entlanggleiten, bis es in eine Ösenöffnung an dem Ösenteil einrasten kann. Erschwerend für die Funktionsfähigkeit ist hierbei jedoch, daß sowohl das Ösenteil als auch das Hakenteil an den beiden Enden der Seitenkette gelenkig angeordnet ist, so daß ein gegenseitiger Eingriff von Haken- und Ösenteil überhaupt nur dann erfolgen kann, wenn es gelingt, das Hakenteil in die verhältnismäßig schmale Öffnung des Ösenteiles ohne Verkanten einzuführen und entgegen dem Druck der Schenkelfeder so weit zu verschieben, bis es in die Ösenöffnung einrasten kann. Ein weiteres Erfordernis für die Funktionsfähigkeit ist dabei auch, daß das Ösenteil zwischen dem seitlich von der Felge hervorstehenden Zapfen und der anschließenden Seitenkette etwa tangential zur Radfelge ausgerichtet gehalten wird, was aber nur bei einer ausreichenden Spannung der Seitenkette der Fall ist. Ohne eine solche Spannung der Seitenkette wird das Ösenteil sich aus der tangentialen Lage zur Radfelge verlagern und ein Einführen des Hakenteiles schon aus diesem Grunde verhindern.

Als weitere Erschwernis für die Funktionsfähigkeit dieser bekannten Vorrichtung, die offensichtlich nur auf dem Papier existiert und nie Eingang in die Praxis gefunden haben dürfte, besteht darin, daß nicht nur eine Seitenkette, sondern zwei Seitenketten an den beiden gegenüberliegenden Radseiten gleichzeitig in dieser Weise aufgezogen und geschlossen werden sollen, was aber kaum durchführbar erscheint.

Bei einer weiteren bekannten, im Oberbegriff des Anspruchs 1 erwähnten Gleitschutzkette (WO 81/02 870) sind zwar im Unterschied zu der Gleitschutzkette nach der US-A-16 00 172 zwei Halteringe aus Federstahldraht sowohl an der Reifeninnenseite als auch an der Reifenaußenseite vorhanden. Der Haltering an der Reifeninnenseite hat dabei zwar einen Haken- und Ösenverschluß, der aber mit dem Gegenstand der vorliegenden Patentanmeldung insofern nicht vergleichbar ist, als der innere Haltering nicht durch diesen Haken- und Ösenverschluß geschlossen gehalten wird. Um den Haltering zu schließen, überlappen sich dessen beide Enden vielmehr und werden durch ein lösbares Klemmorgan miteinander verbunden. Der Haken- und Ösenverschluß befindet sich demgegenüber an den einander zugewandten Enden von zwei verschiebbaren Stahlstäben, die an dem inneren Haltering entlanggleiten und Halteorgane für den Anschluß der Netzteile der Kette an ihren beiden Enden tragen. Diese am inneren Haltering gleitenden Stahlstäbe mit Hakenverschluß haben die Aufgabe, die Netzteile der Gleitschutzkette auch im Bereich der Öffnung des Halteringes ebenso dicht zusammenzubringen, wie dies an den übrigen Stellen der Gleitschutzkette der Fall ist, so daß sich im Bereich des Verschlusses keine Ungleichmäßigkeit beim Abrollen der Gleitschutzkette auf der Fahrbahn ergibt.

An dem Haken- und Ösenverschluß sind dabei aber auch keine zusätzlichen Mittel vorgesehen, um den an der Reifeninnenseite bei der Montage unsichtbaren Haken- und Ösenverschluß leichter schließen zu können.

Bei einer aus der DE-A-20 34 330 bekannten weiteren Vorrichtung handelt es sich nur um eine Art Schnappverschluß für Gleitschutzketten mit innerer und äußerer Seitenkette. Der Schnappverschluß besteht zwar aus einer Art Haken- und Ösenteil, doch sind diese beiden Teile ebenso wie bei der Vorrichtung nach der US-A-16 00 172 gelenkig an den beiden Enden der Seitenketten angeordnet, so daß zum Schließen des Schnappverschlusses ein besonderer Auflegeschlüssel erforderlich ist. Ein derartiger Schnappverschluß ist allein schon aus dem Grunde für eine Verwendung bei einer Gleitschutzkette mit einem Haltering aus Federstahldraht ungeeignet, als das Hakenteil in das Ösenteil des Schnappverschlusses nur nach einer Verschwenkung gegenüber seiner Längsachse eingeführt werden kann, während zum Lösen des Hakens aus seiner Verschlußstellung ein zusätzlicher Entriegelungshebel zwischen dem Ösenteil und dem anschließenden Ende der Seitenkette erforderlich ist.

Bei diesem bekannten Schnappverschluß sind der Verschlußhaken und die Verschlußöse im übrigen so ausgebildet und an den beiden Enden der Seitenkette derart angeordnet, daß der Verschlußhaken mit seinem Hakenkopf zur Radachse weist.

Durch die Erfindung ergibt sich demgegenüber der Vorteil, daß der Verschlußhaken beim Einführen in die Hakenöse durch Entlanggleiten an der feststehenden Auflauffläche oder Auflaufbahn ohne nennenswerten mechanischen Widerstand nach außen in die Einhängeöffnung an der Verschlußöse geführt wird und mit seinem Hakenmaul zwangsläufig in seine Verriegelungsstellung gegenüber dem Ösensteg gelangt, gegen den er durch Spannen der Kette zusätzlich nach außen gezogen wird, um so den Haltering in einfacher Weise ohne weitere Hilfsmittel an der Reifeninnenseite zu sichern.

Von besonderem Vorteil ist dabei, wenn der Haltering derart unter Vorspannung steht, daß sich die beiden Ringenden bei geöffnetem Hakenverschluß mindestens über die dem Hakenverschluß nächstliegenden beiden Anschlußstränge des Kettennetzes hinaus überlappen. Hierdurch ist gewährleistet, daß der Verschlußhaken nach dem Einführen in die Hakenöse von selbst an der schräg nach außen gerichteten Auflauffläche entlanggleitet, bis er den Ösensteg der Verschlußöse erreicht hat und durch Anspannen des Kettennetzes an diesem in seiner Verriegelungsstellung festgelegt werden kann.

Die Vorspannung des Halteringes kann dabei durch das Merkmal des Anspruches 3 auch bei abgenommener Gleitschutzkette in einfacher Weise aufrechterhalten werden, während in den Ansprüchen 4, 5 und 6 jeweils besonders vorteilhafte Ausführungsformen der Erfindung gekennzeichnet sind.

Werden durch die vorstehend genannten Merkmale der Erfindung bereits wesentliche Vorteile gegenüber dem einschlägigen vorbekannten Stande der Technik erreicht, so liegt der Erfindung die weitergehende Aufgabe zugrunde, eine derartige Gleitschutzkette mit einem Trichterverschluß noch dahingehend zu verbessern, daß nicht nur eine leichtere und zuverlässigere Einführung des Verschlußhakens in die Verschlußöse des Trichterverschlusses erreicht wird, sondern daß außerdem die Gleitschutzkette aufgrund ihrer besonderen Ausbildung aus einer möglichst geringen Anzahl von Einzelteilen in besonders einfacher Weise zusammengebaut werden kann.

Die hierfür maßgeblichen Einzelheiten finden sich in den Ansprüchen 7 bis 10, während die Ansprüche 11 und 12 besonders vorteilhafte Verfahren zum Herstellen derartiger Gleitschutzketten beinhalten.

Durch die Erfindung ergibt sich somit nicht nur eine besonders einfache und aus nur wenig Einzelteilen bestehende Ausbildung von Verschlußöse und zugehörigem Trichterverschluß, sondern dadurch, daß die feststehende Auflaufbahn an einer die Verschlußöse über deren gesamte Länge untergreifenden trichterförmigen Halbschale ausgebildet ist und einen vom Inneren des Halteringes zum Ringumfang bis an das Ende der Verschlußöse etwa parabelförmig ansteigenden Verlauf hat, ist auch in einfacher Weise sichergestellt, daß der Verschlußhaken nach Eintritt in den Einführungsschlitz der Halbschale stets an der zum Ende der Verschlußöse hin zunehmend ansteigenden parabelförmigen Auflaufbahn entlanggleitet und auf diese Weise ganz einwandfrei in die Öffnung der Verschlußöse des Trichterverschlusses eingeführt wird, um beim anschließenden Spannen der Kette an dem Ösensteg der Verschlußöse zur Anlage zu kommen und den Haltering gegen unbeabsichtigtes Öffnen einwandfrei zu sichern.

Durch den parabelförmigen Anstieg der Auflaufbahn wird der Verschlußhaken unter der Wirkung des in Einführrichtung in den Trichterverschluß unter Vorspannung stehenden Halteringes zunächst nur allmählich in die Richtung der Verschlußöse geführt, um schließlich am Ende der Verschlußöse durch den zunehmenden Anstieg der Auflaufbahn bis zur Anlage an dem Ösensteg der Verschlußöse nach außen geführt und durch Spannen der Spannkette an der Reifenaußenseite in seine Verriegelungsstellung an der Verschlußöse gezogen zu werden. Hierbei ist es wichtig, daß der Durchziehring für die Spannkette an der Reifenaußenseite immer dem Verschlußhaken des Halteringes an der Reifeninnenseite gegenüberliegt, damit sich der Verschlußhaken beim Spannen der äußeren Seitenkette automatisch in die Verschlußöse einzieht.

Außer diesen Montagevorteilen ergibt die neue Art des Trichterverschlusses auch eine bessere Reinigung von Schneeresten und dergleichen, da der mit einer trichterförmigen Halbschale ausgebildete Verschluß nach unten zur Reifenaufstandsfläche hin offen ist und somit auch bei größerer Schneehöhe auf der Fahrbahn beim Auflegen der Gleitschutzkette nicht verstopfen kann.

Bei der erfindungsgemäßen Herstellung von Gleitschutzketten nach den Ansprüchen 7 bis 10 werden von einem fortlaufenden Federstahldraht auf Länge geschnittene Halteringabschnitte in einfacher Weise lediglich in Ringform der herzustellenden Kette gebogen und sodann an einem Ende zu einer Verschlußöse umgeformt. Anschließend wird auf die Verschlußöse, die mit einem parallelen Endschenkel an einem gegenüberliegenden Abschnitt des Halteringes anliegt, die trichterförmige Halbschale so weit aufgeschoben, bis sie mit ihrem vom Inneren des Halteringes zu der Verschlußöse hin offenen Einführungsschlitz vollständig unter die Verschlußöse gelangt ist und mit einer an dem Einführtrichter einteilig ausgeformten Haltemuffe mit einer Langlochöffnung den freien Endschenkel der Verschlußöse aufnimmt und mit dem benachbarten Abschnitt des Halteringes festhält. Sodann wird das freie Ende des Endschenkels der Verschlußöse hinter der trichterförmigen Halbschale durch eine ringförmige Plombe am Haltering festgelegt, um anschließend entweder nur die die Netzteile der Gleitschutzkette in gleichmäßigem Abstand haltenden Schlauchstücke oder Distanzhülsen mit gegenseitigem Spiel auf den Haltering aufzuschieben und nach Sicherung durch eine ringförmige Plombe den U-förmigen Verschlußhaken auszuformen und anschließend die Netzteile der Kette mit ihren Seitenhaken in die Zwischenräume zwischen den Schlauchstücken oder Distanzhülsen einzuhängen, oder aber die einzelnen Netzteile der Gleitschutzkette mit ihren Seitenhaken und den diese in Abstand haltenden Schlauchstücken oder Distanzhülsen nacheinander aufzuschieben, um anschließend die Plombe zu sichern und den U-förmigen Verschlußhaken auszuformen.

Bevorzugte Ausführungsbeispiele der Erfindung sind in der Zeichnung schematisch dargestellt, wobei lediglich die im Sinne der Erfindung funktionsnotwendigen Teile der Gleitschutzketten gezeigt sind. Es zeigen

Fig. 1 eine Teilansicht der einander überlappenden beiden Enden eines Halteringes einer sogenannten Schnellmontagekette,

Fig. 2 die beiden Enden des Halteringes der Gleitschutzkette im auseinandergezogenen Zustand beim Einführen des Verschlußhakens in die Verschlußhülse oder Verschlußöse am gegenüberliegenden Ende des Halteringes,

Fig. 3 den Verschlußhaken des Halteringes beim Nachaußengleiten in die Einhängeöffnung der Einhängehülse,

Fig. 4 den Verschlußhaken des Halteringes nach Erreichen der Verriegelungsstellung in der Einhängehülse bzw. in dem Einführtrichter des Trichterverschlusses,

Fig. 5 den Haltering von Fig. 1 bis 4 nach Einhängen des Verschlußhakens in einen Einhängering am gegenüberliegenden Ringabschnitt des Halteringes,

Fig. 6 den Einhängering mit eingehängtem Verschlußhaken in perspektivischer Darstellung,

Fig. 7 eine schematische Teilansicht einer gegenüber den Ausführungsbeispielen von Fig. 1 bis 5 abgewandelten weiteren Ausführungsform einer Gleitschutzkette mit Haken- und Ösenverschluß,

Fig. 8 eine Ansicht auf die Verschlußöse der Gleitschutzkette in Richtung des Pfeiles VIII von Fig. 7,

Fig. 9 eine Seitenansicht dieses abgewandelten Hakenverschlusses beim Einhängen des Verschlußhakens in die Verschlußöse am Haltering,

Fig. 10 den Hakenverschluß einer weiteren Ausführungsform einer Gleitschutzkette mit einem unter Vorspannung stehenden Haltering aus Federstahldraht in perspektivischer Teildarstellung vor dem Einführen des Verschlußhakens in den Verschlußtricter,

Fig. 11 eine zugehörige Draufsicht in Richtung des Pfeiles XI von Fig 10,

Fig. 12 einen Schnitt durch eine als Verschlußtrichter des Halteringes dienende Halbschale gemäß Schnittlinie XII - XII von Fig. 11,

Fig. 13 einen weiteren Schnitt durch die Halbschale gemäß Schnittlinie XIII - XIII Von Fig. 11,

Fig. 14 den Hakenverschluß vor dem Einführen des Verschlußhakens in den Einführungsschlitz der Halbschale in Richtung des Pfeiles XIV von Fig. 11 gesehen,

Fig. 15 den Verschlußhaken, nachdem er an der etwa parabelförmigen Auflaufbahn der Halbschale in die Langlochöffnung der Verschlußöse gelangt ist,

Fig. 16    den Verschlußhaken in Anlage am Ösensteg der Verschlußöse in Seitenansicht und

Fig. 17    eine Draufsicht auf den eingehängten Hakenverschluß in Richtung des Pfeiles XVII von Fig. 16.

Bei den in der Zeichnung gezeigten Teildarstellungen handelt es sich um Einzelheiten von Gleitschutzketten für Fahrzeugräder, die insbesondere als Spurkreuzketten ausgebildet sind und an der Reifeninnenseite einen an einer Stelle offenen, durch einen Hakenverschluß 2 schließbaren Haltering 1 aus einem hochelastischen Federstahldraht aufweisen, an dem die Anschlußstränge 3 der Netzteile der Gleitschutzketten mittels Seitenhaken 4 oder dergleichen aufgereiht und durch auf den Haltering 1 aufgeschobene Schlauchstücke oder Distanzhülsen 5 in gleichmäßigem Abstand gehalten sind. Der Hakenverschluß 2 besteht aus einem in der Ringebene nach außen umgebogenen Verschlußhaken 6 an einem Ende 1a des Halteringes 1 und aus einer ringförmig geschlossenen, langlochartigen Verschlußöse 7 am anderen Ringende 1b.

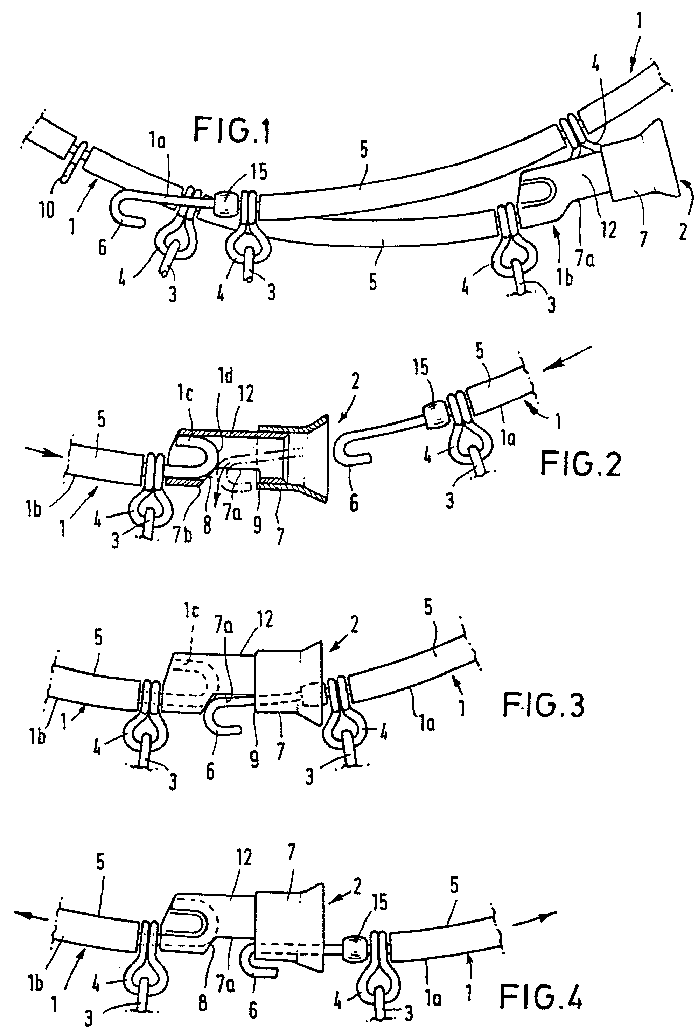

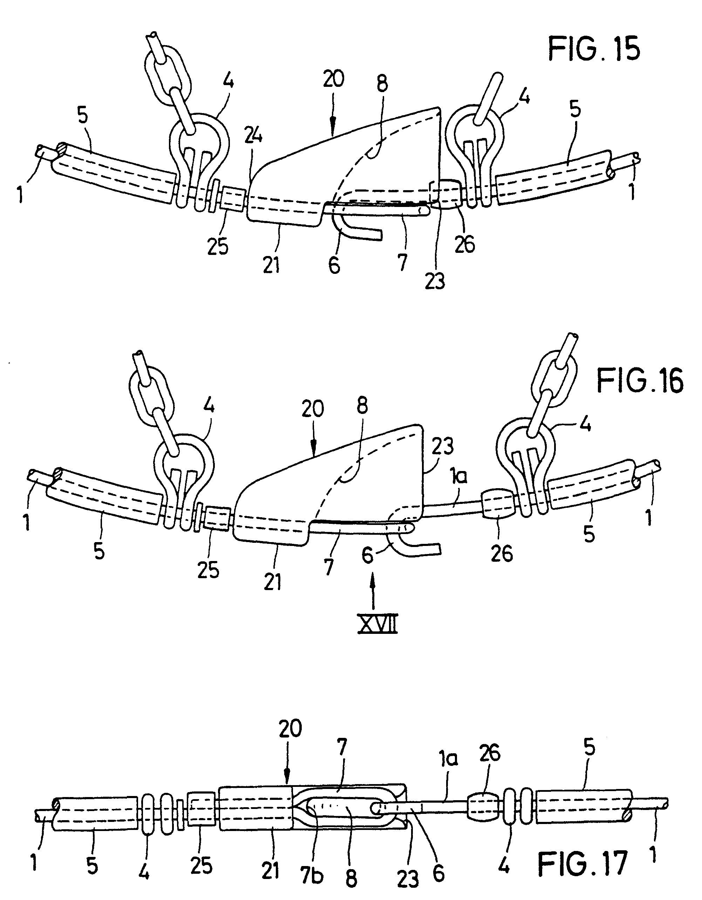

Wie in der Zeichnung im einzelnen zu erkennen ist, weist die Verschlußöse 7 bei allen gezeigten Ausführungsbeispielen eine mit dem Haltering 1 einstückig ausgebildete, schräg gegen den Außenumfang des Halteringes 1 gerichtete feststehende Auflauffläche oder Auflaufbahn 8 für den Verschlußhaken 6 auf, so daß der Verschlußhaken 6 beim Einführen in die Verschlußöse 7 durch Entlanggleiten an der schrägen Auflauffläche oder Auflaufbahn 8 gegen den Ösensteg 9 von selbst in seine Verriegelungsstellung, wie sie in Fig. 4 und 16 gezeigt ist, gelangt.

Der Haltering 1 steht dabei derart unter Vorspannung, daß sich die beiden Ringenden 1a, 1b bei geöffnetem Hakenverschluß 2 mindestens über die dem Hakenverschluß nächstliegenden beiden Anschlußstränge 3 des Kettennetzes hinaus überlappen, wie dies in Fig. 1 gezeigt ist, aber gleichmaßen für alle gezeigten Ausführungsbeispiele gilt.

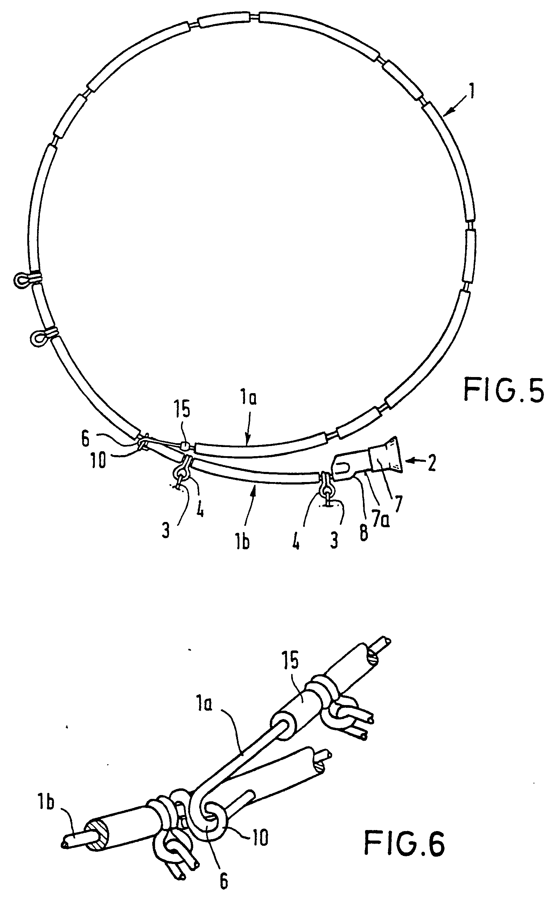

Wie in Fig. 1, 5 und 6 gezeigt ist, ist am Haltering 1 außerdem ein Einhängering 10 für den gegenüberliegenden Verschlußhaken 6 in einem solchen Abstand von dem Hakenverschluß 2 vorgesehen, daß der Haltering 1 im eingehängten Zustand (Fig. 5 und 6) unter Vorspannung gehalten ist.

Bei der in Fig. 1 bis 5 gezeigten Ausführungsform der Erfindung besteht die Verschlußöse 7 aus einer an der Reifeninnenseite anliegenden, an ihrem offenen Ende trichterförmig nach außen aufgeweiteten Einhängehülse oder Einhängetülle 12 mit einer zum Reifenumfang gerichteten Einhängeöffnung 7a für den zum Reifenumfang nach außen umgebogenen Verschlußhaken 6 des unter Federspannung stehenden Halteringes 1. Das in der Einhängehülse 12 befestigte Ende 1c des Halteringes 1 ist dabei in der Ringebene zum Ringinneren hin hakenförmig umgebogen und ragt in den Schaft der Einhängehülse 12 von deren Rückseite hinein.

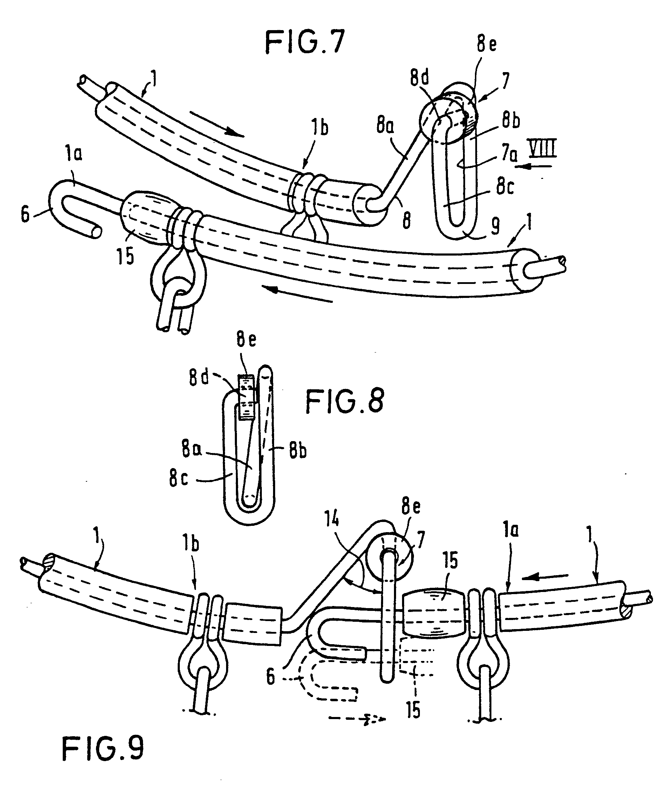

Wie in Fig. 2 bis 4 der Zeichnung im einzelnen zu erkennen ist, ragt das hakenförmig umgebogene Befestigungsende 1c des Halteringes 1 mit seinem Scheitelpunkt 1d dabei über das rückwärtige Ende 7b der Einhängeöffnung 7a an der Einhängehülse 12 derart hinaus, daß es eine schräge Auflauffläche 8 für den Verschlußhaken 6 bildet. Bei der in Fig. 7 bis 9 gezeigten abgewandelten weiteren Ausführungsform der Erfindung ist das eine Ende 1b des Halteringes 1 zu einer ringförmig geschlossenen, langlochartigen Verschlußöse 7 umgebogen. Es ist zunächst mit einem als Auflauffläche 8 aus der Ebene des Halteringes 1 seitlich verkröpften und schräg zum Ringinneren weisenden Abschnitt 8a ausgebildet und von dessen innenliegendem Ende in einem Abschnitt 8b im spitzen Winkel 14 von etwa 30° bis 50° radial nach außen umgebogen und von dort mit einem weiteren Abschnitt 8c unter Bildung einer quer zum Ringumfang ausgerichteten ovalen Ösenöffnung 7a mit einem Ösensteg 9 seitlich zurückgebogen und schließlich mit einem endseitig gegen den radialen Schenkel bzw. Abschnitt 8b umgebogenen Drahtende 8d geschlossen.

Um ein versehentliches Einrasten des Verschlußhakens 6 am Drahtende 8d zu vermeiden, kann es dabei zweckmäßig sein, daß das Drahtende 8d einen Durchmesser hat, der größer ist als das Hakenmaul am Verschlußhaken 6 weit ist, was beispielsweise durch eine auf das Drahtende 8d aufgesetzte Gummi- oder Kunststoffrolle 8e erreicht werden kann.

Abgesehen von der speziellen Ausbildung der Verschlußöse 7 und der Abweiserrolle 8e ist diese zweite Ausführungsform im übrigen genauso ausgebildet, wie die in Fig. 1 bis 5 gezeigte erste Ausführungsform einer Gleitschutzkette mit einem Haltering 1 aus hochelastischem Federstahldraht, und weist hinter dem Verschlußhaken 6 jeweils einen Anschlagring 15 auf, der beim Erreichen der Verriegelungsstellung gemäß Fig. 3 bzw. Fig. 8 an der Verschlußöse 7 bzw. an der Einhängehülse 12 zur Anlage kommt und ein weiteres Eindringen des Hakens 6 in die Verschlußöse 7 bzw. Einhängehülse 12 verhindert.

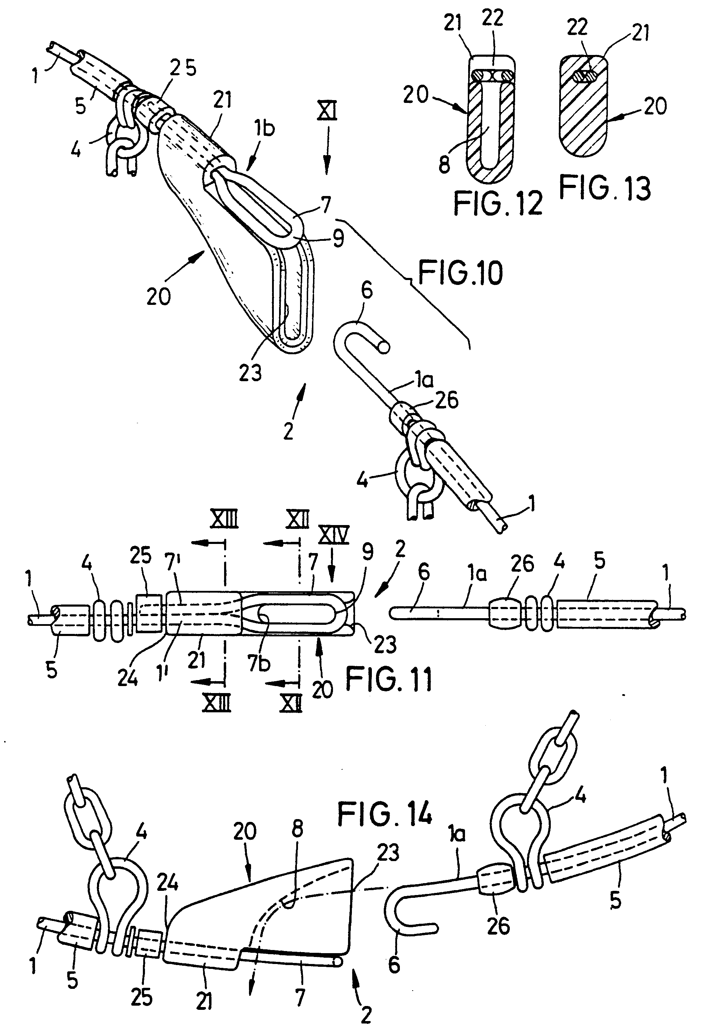

Bei dem in Fig. 10 bis 17 gezeigten weiteren Ausführungsbeispiel handelt es sich um eine Teildarstellung einer Gleitschutzkette für Fahrzeugräder, die ebenso wie die beiden ersten Ausführungsbeispiele insbesondere als Spurkreuzkette ausgebildet ist und einen an der Reifeninnenseite angeordneten, an einer Stelle offenen, durch einen trichterförmigen Hakenverschluß 2 schließbaren Haltering 1 aus hochelastischem Federstahldraht besitzt. An dem Haltering 1, der derart unter Vorspannung steht, daß sich die Ringenden in entspanntem Zustand überlappen, sind die Netzteile der Gleitschutzkette bzw. deren Anschlußstränge 3 mittels Seitenhaken 4 aufgereiht und durch aufgeschobene Schlauchstücke oder Distanzhülsen 5 aus Kunststoffmaterial in gleichmäßigem Abstand gehalten. Der Hakenverschluß 2 besteht aus einem in der Ebene des Halteringes 1 etwa U-förmig nach außen gebogenen Verschlußhaken 6 an einem Ende 1a des Halteringes 1 und aus einer ringförmig geschlossenen, langlochartigen Verschlußöse 7 am anderen Ringende 1b mit einem Ösensteg 9, an dem der Verschlußhaken 6 bei gespannter Gleitschutzkette zur Anlage kommt.

Wie in der Zeichnung weiterhin zu erkennen ist, besitzt die aus dem Material des Halteringes 1 in Richtung des Ringumfanges und quer zur Ringebene des Halteringes einstückig gebogene Verschlußöse 7 einen am Haltering 1 parallel anliegenden freien Endschenkel 7', auf den eine trichterförmige Halbschale 20 aufgeschoben ist, die den freien Endschenkel 7' der Verschlußöse 7 in einer Haltemuffe 21 mit einer Langlochöffnung 22 derart aufnimmt, daß der Endschenkel 7' an dem benachbarten Abschnitt 1' des Halteringes 1 satt anliegt.

Wie die Zeichnung weiterhin zeigt, befindet sich an der trichterförmigen Halbschale 20, die die Verschlußöse 7 über deren gesamte Länge untergreift, eine schräg gegen den Außenumfang des Halteringes 1 gerichtete feststehende Auflaufbahn 8, die einen vom Inneren des Halteringes 1 zum Ringumfang bis an das Ende 7b der Verschlußöse 7 etwa parabelförmig ansteigenden Verlauf hat. Die Halbschale 20 hat außerdem einen vom Inneren des Halteringes 1 etwa radial zur Verschlußöse 7 gerichteten Einführungsschlitz 23 für den Verschlußhaken 6, von dessen innenliegendem Ende die parabelförmige Auflaufbahn 8 zunehmend ansteigt, um am rückwärtigen Ende 7b der Verschlußöse 7 etwa radial zum Haltering 1 auszulaufen, so daß der Verschlußhaken 6 beim Einführen in die Halbschale 20 zunächst nur geringfügig nach außen bewegt wird, bis das Ende des Verschlußhakens 6 den Ösensteg 9 passiert hat, woraufhin der Verschlußhaken 6 durch den zunehmenden Anstieg der Auflaufbahn 8 durch die Öffnung der Verschlußöse 7 so weit nach außen geführt wird, bis er mit dem Ende 1a des Halteringes 1 an dem Ösensteg 9 zur Anlage kommt und durch Spannen der nicht gezeigten äußeren Seitenkette der Gleitschutzkette in seine Verriegelungsstellung von Fig. 7 gezogen werden kann.

Die trichterförmige Halbschale 20 besteht vorzugsweise einstückig aus Kunststoff, kann aber auch aus Metall gefertigt sein.

Bei der Herstellung derartiger Gleitschutzketten wird so vorgegangen, daß auf einen zunächst nur mit einer umgebogenen Verschlußöse 7 versehenen vorgebogenen Haltering 1 aus hochelastischem Federstahldraht eine trichterförmige Halbschale 20 bis an die Verschlußöse 7 derart aufgeschoben wird, bis sie die Verschlußöse 7 mit ihrem Einführungsschlitz 23 vollständig untergreift und den freien Endschenkel 7' der Verschlußöse 7 in der Langlochöffnung 22 an ihrer Haltemuffe 21 aufnimmt. Anschließend wird der über das Ende 24 der trichterförmigen Halbschale 20 hinausragende freie Endschenkel 7' der Verschlußöse 7 hinter der trichterförmigen Halbschale 20 durch eine ringförmige Plombe 25, die dem Anschlagring 15 von Fig. 1 bis 8 entspricht, an dem Haltering 1 festgelegt, und sodann können entweder die Netzteile der Kette und die diese in gleichmäßigem Abstand haltenden Schlauchstücke oder Distanzhülsen 5 auf den Haltering 1 aufgeschoben und wiederum durch eine endseitige Plombe 26 am Haltering 1 gesichert werden, um anschließend den U-förmigen Verschlußhaken 6 am Halteringende 1a radial nach außen umzubiegen. Es ist aber auch möglich, nach der Befestigung der Halbschale 20 zunächst nur die die Netzteile der Kette im Abstand haltenden Schlauchstücke oder Distanzhülsen 5 mit Spiel auf den Haltering 1 aufzuschieben und durch die Plombe 26 zu sichern, um anschließend den U-förmigen Verschlußhaken 6 zu biegen und erst dann die Netzteile der Kette mit ihren Seitenhaken 4 in die Lücken zwischen den Distanzhülsen 5 einzuhängen und durch Umbiegen der Endschenkel der Seitenhaken 4 an dem Haltering 1 zu sichern.

**Patentansprüche**

1. Gleitschutzkette für Fahrzeugräder, insbesondere Spurkreuzkette mit einem an der Reifeninnenseite angeordneten, an einer Stelle offenen, durch einen Hakenverschluß (2) schließbaren Haltering (1) aus Federstahldraht, an dem die Netzteile (3) der Kette aufgereiht und in gleichmäßigem Abstand gehalten sind, wobei der Hakenverschluß aus einem in der Ebene des Halteringes etwa U-förmig nach außen gebogenen Verschlußhaken (6) an einem Ende und aus einer ringförmig geschlossenen langlochartigen Verschlußöse (7) am anderen Ende des Halteringes mit einem Ösensteg (9) besteht, an dem der Verschlußhaken zur Anlage kommt, dadurch gekennzeichnet, daß die Verschlußöse (7) eine gegenüber dem Haltering (1) feststehende, vom Ringinneren her schräg gegen den Außenumfang des Halteringes (1) verlaufende Auflauffläche oder Auflaufbahn (8) für den gegenüberliegenden Verschlußhaken (6) derart aufweist, daß der Verschlußhaken (6) beim Einführen in die Verschlußöse (7) durch Entlanggleiten an der Auflauffläche oder Auflaufbahn (8) bis über den Außenumfang des Halteringes (1) hinaus in seine Verriegelungsstellung gegenüber dem Ösensteg (9) nach außen geführt wird.

2. Gleitschutzkette nach Anspruch 1, dadurch gekennzeichnet, daß der Haltering (1) derart unter Vorspannung steht, daß sich die beiden Ringenden (1a, 1b) bei geöffnetem Hakenverschluß (2) mindestens über die dem Hakenverschluß (2) nächstliegenden beiden Anschlußstränge (3) des Kettennetzes hinaus überlappen. (Fig. 1)

3. Gleitschutzkette nach Anspruch 1 oder 2, dadurch gekennzeichnet, daß am Haltering (1) in einem Abstand von der Verschlußöse (7), der größer ist als der Abstand zu den beiden nächsten Anschlußsträngen (3) des Kettennetzes, ein Einhängering (10) für den Verschlußhaken (6) des Halteringes (1) derart vorgesehen ist, daß der Haltering (1) bei in den Einhängering (10) eingehaktem Verschlußhaken (6) unter Vorspannung gehalten ist. (Fig. 5 und 6)

4. Gleitschutzkette nach einem der Ansprüche 1 bis 3, bei der die Verschlußöse (7) aus einer an der Reifeninnenseite anliegenden, an ihrem offenen Ende trichterförmig nach außen aufgeweiteten Einhängehülse (12) mit einer zum Reifenumfang gerichteten Einhängeöffnung (7a) für den zum Reifenumfang nach außen gebogenen Verschlußhaken (6) des unter Federspannung stehenden Halteringes (1) besteht, und wobei das in der Einhängehülse (12) befestigte Ende (1c) des Halteringes (1) in der Ringebene hakenförmig umgebogen ist und in den Schaft der Einhängehülse (12) von deren Rückseite hineinragt, dadurch gekennzeichnet, daß das hakenförmig umgebogene Befestigungsende (1c) des Halteringes (1) mit seinem Scheitelpunkt (1d) über das rückwärtige Ende (7b) der Einhängeöffnung (7a) an der Einhängehülse (12) derart hinausragt, daß es eine schräge Auflauffläche (8) für den Verschlußhaken (6) bildet. (Fig. 2 bis 4)

5. Gleitschutzkette nach einem der Ansprüche 1 bis 3, dadurch gekennzeichnet, daß das eine Ende (1b) des Halteringes (1) die Verschlußöse (7) bildet, indem es zunächst mit einem als Auflauffläche (8) aus der Ringebene seitlich verkröpften und schräg zum Ringinneren weisenden Abschnitt (8a) ausgebildet und von dessen innenliegendem Ende in einem Abschnitt (8b) in spitzem Winkel (14) etwa radial nach außen umgebogen und von dort mit einem weiteren Abschnitt (8c) unter Bildung einer quer zum Ringumfang ausgerichteten Ösenöffnung (7a) mit einem Ösensteg (9) seitlich zurückgebogen und mit einem endseitig gegen den radialen Schenkel bzw. Abschnitt (8b) umgebogenen Drahtende (8d) geschlossen ist. (Fig. 7 bis 9)

6. Gleitschutzkette nach Anspruch 5, dadurch gekennzeichnet, daß das Drahtende (8d), beispielsweise durch eine aufgesetzte Gummi- oder Kunststoffrolle (8e), einen Durchmesser hat, der größer ist als das Hakenmaul am Verschlußhaken (6) weit ist. (Fig. 7 bis 9)

7. Gleitschutzkette nach einem der Ansprüche 1 bis 3 mit enem Trichterverschluß, dadurch gekennzeichnet, daß die Verschlußöse (7) aus dem Material des Halteringes (1) in Richtung des Ringumfanges und quer zur Ringebene einstück gebogen ist, und daß die feststehende Auflaufbahn (8) an einer die Verschlußöse (7) über deren gesamte Länge untergreifenden trichterförmigen Halbschale (20) ausgebildet ist und einen vom Inneren des Halteringes (1) zum Ringumfang bis an das Ende (7b) der Verschlußöse (7) etwa parabelförmig ansteigenden Verlauf hat. (Fig. 10 bis 17)

8. Gleitschutzkette nach Anspruch 7, dadurch gekennzeichnet, daß die Verschlußöse (7) einen quer zur Ebene des Halteringes (1) an den Haltering parallel zurückgebogenen freien Endschenkel (7') aufweist, und daß die trichterförmige Halbschale (20) einen vom Inneren des Halteringes (1) zur Verschlußöse (7) gerichteten Einführungsschlitz (23) für den Verschlußhaken (6) hat und einen Halteringabschnitt (1') mit dem daran anliegenden parallelen Endschenkel (7') der Verschlußöse (7) unmittelbar hinter der Verschlußöse (7) in einer an der Halbschale (20) einteilig ausgeformten Haltemuffe (21) mit einer Langlochöffnung (22) aufnimmt.

9. Gleitschutzkette nach Anspruch 7 und 8, dadurch gekennzeichnet, daß der freie Endschenkel (7') der Verschlußöse (7) über das Ende (24) der Haltemuffe (21) an der trichterförmigen Halbschale (20) hinausragt und durch eine ringförmige Plombe (25) an dem Haltering (1) festgelegt ist, die auch die Halbschale (20) an der Verschlußöse (7) sichert.

10. Gleitschutzkette nach den Ansprüchen 7 bis 9, dadurch gekennzeichnet, daß die trichterförmige Halbschale (20) einstückig aus Kunststoff oder Metall besteht.

11. Verfahren zum Herstellen von Gleitschutzketten nach einem oder mehreren der Ansprüche 7 bis 10, dadurch gekennzeichnet, daß auf einen mit einer Verschlußöse (7) versehenen vorgebogenen Haltering (1) aus Federstahldraht eine trichterförmige Halbschale (20) mit einer Langlochöffnung (22) bis an die Verschlußöse (7) derart aufgeschoben wird, daß sie mit ihrem Einführungsschlitz (23) die Verschlußöse (7) untergreift und den freien Endschenkel (7') der Verschlußöse (7) in ihrer Haltemuffe (21) aufnimmt, daß anschließend der freie Endschenkel (7') der Verschlußöse (7) durch eine ringförmige Plombe (25) mit dem Haltering (1) fest verbunden wird, daß sodann die Netzteile der Kette zusammen mit diese in gleichmäßigem Abstand haltenden Schlauchstücken oder Distanzhülsen (5) auf den Haltering (1) aufgeschoben und durch eine endseitige Plombe (26) am Haltering (1) gesichert werden, und daß schließlich der U-förmige Verschlußhaken (6) am Halteringende (1a) radial nach außen umgebogen wird.

12. Verfahren zum Herstellen von Gleitschutzketten nach einem oder mehreren der Ansprüche 7 bis 10, dadurch gekennzeichnet, daß auf einen mit einer Verschlußöse (7) versehenen vorgebogenen Haltering (1) aus Federstahldraht eine trichterförmige Halbschale (20) mit einer Langlochöffnung (22) bis an die Verschlußöse (7) derart aufgeschoben wird, daß sie mit ihrem Einführungsschlitz (23) die Verschlußöse (7) untergreift und den freien Endschenkel (7') der Verschlußöse (7) in ihrer Haltemuffe (21) aufnimmt, daß anschließend der freie Endschenkel (7') der Verschlußöse (7) durch eine ringförmige Plombe (25) mit dem Haltering (1) fest verbunden wird, daß sodann die die Netzteile der Kette in gleichmäßigem Abstand haltenden Schlauchstücke oder Distanzhülsen (5) mit gegenseitigem Spiel auf den Haltering (1) aufgeschoben und durch eine endseitige Plombe (26) am Haltering (1) gesichert werden, daß anschließend der U-förmige Verschlußhaken (6) am Halteringende (1a) radial nach außen umgebogen wird, und daß schließlich die Netzteile der Kette mit ihren Seitenhaken (4) in die Zwischenräume zwischen den Distanzhülsen (5) eingehängt und durch Umbiegen der Schenkelenden der Seitenhaken (4) gesichert werden.

**Claims**

1. A vehicle anti-skid chain particularly a cross-chain, with a bracing ring (1) of spring-steel wire situated at the inboard side of the tyre and open at one location, the bracing ring (1) being closed by a hook connection (2), the bracing ring having chain spans (3) attached to it at regular intervals; the hook connection (2) consisting of, at one end of the bracing ring (1), a U-shaped connecting hook (6) situated in the plane of the bracing ring (1) and bent outwards away from it and, at the other end of the bracing ring (1), an annular, slot-like connecting eye (7) with a catch-lip (9) over which the connecting hook (6) engages, characterised in that the connecting eye (7) has a guide-surface (8) which is stationary relative to the bracing ring (1) and slopes relative to the run of the bracing ring wire, for guiding the connecting hook (6) when it is introduced into the slot -like connecting eye (7), the connecting hook (6) sliding, during this operation, over the guide-surface (8) in such a way that the hook (6) comes to project outwards to beyond the periphery of the bracing ring (1) into a position where it is ready to engage with the catch-lip (9).

2. Anti-skid chain as claimed in Claim 1, characterised in that the bracing ring (1) is pre-stressed in such a way that when the hook -connection (2) is open the two ends (1a, 1b) of the bracing ring (1) overlap at least as far as the two chain spans (3) nearest to the hook -connection (2) (Figure 1).

3. Anti-skid chain as claimed in Claims 1 or 2, characterised in that a holder ring (10) is attached to the bracing ring (1) at a distance from the connecting eye (7) which is greater than the distance to the two nearest chain spans (3) and is such that when the connecting hook (6) is engaged in the holder ring (10) the bracing ring (1) is pre-stressed (Figures 5 and 6).

4. Anti-skid chain as claimed in Claims 1 to 3, in which the connecting eye (7) consists of a connecting socket (12) resting against the inboard side of the tyre and terminating in a funnel-shaped mouth (7), the connecting socket (12) having a slot (7a) opening outwards away from the periphery of the bracing ring (1), the slot (7a) taking the outwards bent connecting hook (6) on the other end of the resiliently pre-stressed bracing ring (1); and in which the end (1c) of the bracing ring (1) which is fixed to the connecting socket (12) is bent around in the plane of the bracing ring (1) to form a hook, which projects inwards from behind into the interior of the connecting socket (12), characterised in that the crest (1d) of the hook on this end (1c) of the bracing ring (1) projects forwards to beyond the back-end (7b) of the slot (7a) of the connecting socket (12), so as to form a sloping guide-surface (8) along which the connecting hook (6) slides when the hook (6) is introduced into the funnel-shaped mouth (7) of the connecting socket (12) (Figures 2 to 4).

5. Anti-skid chain as claimed in one of the Claims 1 to 3, characterised in that the one end (1b) of the bracing ring (1) forms the connecting eye (7), this end (1b) having a portion (8a) which is bent inwards in the plane of the bracing ring (1), sloping towards the interior of the bracing ring (1), to form the sloping guide-surface (8) for the hook (6) on the other end of the bracing ring (1); this portion (8a) being extended to form a second portion (8b) bent radially outwards, with respect to the bracing ring (1), at an acute angle (14); the second portion (8b) itself being extended to form a third portion (8c) which, together with the second portion (8b), forms the slot (7a) extending transversely to the run of the bracing ring wire (1) or receiving the hook (6) on the other end of the bracing ring wire (1); the bend between (8b) and (8c) forming the catch-lip (9) over which the hook (6) engages; the third portion (8c) of the bracing ring wire (1) being finally bent over transversely, with respect to the run of the bracing ring (1), to form a wire-end (8d) which closes the slot (7a) (Figures 7 to 9).

6. Anti-skid chain as claimed in Claim 5, characterised in that the wire-end (8d) is given a diameter, for example by mounting over it a rubber or synthetic resin roller (8e), which is greater than the internal diameter of the mouth of the hook (6) (Figures 7 to 9).

7. Anti-skid chain as claimed in one of the Claims 1 to 3, with a funnel-mouth hook connection, characterised in that the connecting eye (7) is a loop formed on one end of the bracing wire (1), the plane of the loop (7) being perpendicular to the plane of the bracing ring (1), the loop (7) being formed by bending the wire of the bracing ring (1); the stationary guide-surface (8) being a surface of a half-funnel (20) extending under the entire length of the connecting eye (7); the guide-surface (8) rising outwards on an approximately parabolic curve from the interior of the bracing ring (1) to the back end (7b) of the connecting eye (7) (Figures 10 to 17).

8. Anti-skid chain as claimed in Claim 7, characterised in that the connecting eye (7) has a free end-limb (7') extending back next to and parallel to the wire of the bracing ring (1), the two wires together occupying a plane transverse to the plane of the bracing ring (1); the half-funnel (20) having an entry slot (23) extending from the interior of the bracing ring (1) outwards to the connecting eye (7), for the insertion of the connecting hook (6); and a connecting socket (21) integral with the half-funnel (20) and situated just behind the connecting eye (7); the connecting socket (21) containing, in a slot (22), a portion (1') of the bracing ring (1) and, next to it and parallel to it, the free end-limb (7') of the connecting eye (7).

9. Anti-skid chain as claimed in Claims 7 and 8, characterised in that the free end-limb (7') of the connecting eye (7) extends backwards to beyond the back end (24) of the connecting socket (21) of the half-funnel (20), where the free end-limb (7') is secured to the bracing ring (1) by an annular lead seal (25), which also secures the half-funnel (20) to the connecting eye (7).

10. Anti-skid chain as claimed in Claims 7 to 9, characterised in that the half-funnel (20) is a one-piece structure of a synthetic resin or of metal.

11. Process for manufacturing an anti-skid chain of the kind claimed in one or more of the Claims 7 to 10, characterised in that starting from a previously circularly pre-stressed bracing ring (1) of spring steel equipped with a connecting eye (7), there is pushed forwards over the bracing ring (1) as far as the connecting eye (7) a half-funnel (20) containing a slot (22), until the entry-slot (23) of the half funnel (20) comes under the connecting eye (7), the connecting socket (21) of the half-funnel (20) receiving the free end-limb (7') of the connecting eye (7); after which the free end-limb (7') is secured to the bracing ring (1) by an annular lead seal (25); after which the spans of the anti-skid chain are pushed over the bracing ring (1), spaced apart at regular intervals by spacer tubes (5), and secured in place by a lead seal (26); after which, finally, the U-shaped connecting hook (6) is bent radially outwards on the other end (1a) of the bracing ring (1).

12. Process for manufacturing an anti-skid chain of the kind claimed in one or more of the Claims 7 to 10, characterised in that starting from a previously circularly pre-stressed bracing ring (1) of spring steel equipped with a connecting eye (7), there is pushed forwards over the bracing ring (1) as far as the connecting eye (7) a half-funnel (20) containing a slot (22), until the entry-slot (23) of the half-funnel (20) comes under the connecting eye (7), the connecting socket (21) of the half-funnel (20) receiving the free end-limb (7') of the connecting eye (7); after which the free end-limb (7') is secured to the bracing ring (1) by an annular lead seal (25); after which the spacer tubes (5) for spacing apart the chain spans are pushed over the bracing ring (1), but leaving clearances between them, and secured in place by a lead seal (26); after which the U-shaped connecting hook (6) is bent radially outwards on the other end (1a) of the bracing ring (1); after which, finally, the chain spans are hooked by their side-hooks (4) to the bracing wire (1) between the spacer tubes (5), the side-hooks (4) being bent securely closed.

**Revendications**

1. Chaîne de protection anti-dérapage pour roues de véhicule, notamment chaîne croisillonnée comportant un anneau de maintien (1) en fil en acier à ressort, disposé sur le côté intérieur du pneumatique, ouvert en un endroit, pouvant être fermé par une fermeture à crochet (2), sur lequel les parties réticulées (3) de la chaîne sont alignées et sont maintenues avec un espacement uniforme, la fermeture à crochet se composant d'un crochet de fermeture (6), recourbé vers l'extérieur à peu près en forme de U dans le plan de l'anneau de maintien et placé à une extrémité de celui-ci ainsi que d'une oreille de fermeture (7), de profil annulaire fermé en forme de trou oblong et placée à l'autre extrémité de l'anneau de maintien en comportant une âme (9) contre laquelle vient s'appliquer le crochet de fermeture, caractérisée en ce que l'oreille de fermeture (7) comporte une surface ou voie de guidage (8) du crochet de fermeture (6) placé en position opposée, maintenue fixe par rapport à l'anneau de maintien (1), et orientée en oblique depuis l'intérieur de l'anneau vers la périphérie extérieure de cet anneau de maintien (1), de telle sorte que le crochet de fermeture (6), lors de son engagement dans l'oreille de fermeture (7), soit guidé vers l'extérieur, par glissement le long de la surface ou voie de guidage (8) au-dessus de la périphérie extérieure de l'anneau de maintien (1) et jusque dans sa position de verrouillage par rapport à l'âme (9) de l'oreille.

2. Chaîne de protection anti-dérapage selon la revendication 1, caractérisée en ce que l'anneau de maintien (1) est soumis à une précontrainte de telle sorte que les deux extrémités (1a, 1b) de l'anneau se recouvrent, lorsque la fermeture à crochet (2) est ouverte, au moins au-dessus des deux brins de liaison (3) du réseau de chaîne qui sont les plus proches de la fermeture à crochet (2) (figure 1).

3. Chaîne de protection anti-dérapage selon la revendication 1 ou 2, caractérisée en ce qu'il est prévu sur l'anneau de maintien (1), à une distance de l'oreille de fermeture (7) qui est supérieure à la distance par rapport aux deux brins adjacents de liaison (3) du réseau de chaîne, un anneau d'accrochage (10) pour le crochet de fermeture (6) de l'anneau de maintien (1) de telle sorte que l'anneau de maintien (1) soit maintenu en précontrainte lorsque le crochet de fermeture (6) est suspendu à l'anneau d'accrochage (10) (figures 5 et 6).

4. Chaîne de protection anti-dérapage selon une des revendications 1 à 3, dans laquelle l'oreille de fermeture (7) se compose d'un manchon d'accrochage (12), s'appliquant contre le côté intérieur du pneumatique, s'élargissant vers l'extérieur en forme d'entonnoir à son extrémité ouverte et comportant une ouverture d'accrochage (7a), dirigée vers la périphérie du pneumatique, pour le crochet de fermeture (6), recourbé vers l'extérieur en direction de la périphérie du pneumatique, de l'anneau de maintien (1) soumis à une tension élastique, tandis que l'extrémité (1c), fixée dans le manchon d'accrochage (12), de l'anneau de maintien (1) est recourbée en forme de crochet dans le plan de l'anneau et s'engage dans le corps du manchon d'accrochage (12) par son côté arrière, caractérisée en ce que l'extrémité de fixation (1c), recourbée en forme de crochet, de l'anneau de maintien (1) dépasse par son sommet (1d) au-dessus de l'extrémité arrière (7b) de l'ouverture d'accrochage (7a) du manchon d'accrochage (12) de telle sorte qu'une surface inclinée de guidage (8) soit formée pour le crochet de fermeture (6) (figures 2 à 4).

5. Chaîne de protection anti-dérapage selon une des revendications 1 à 3, caractérisée en ce qu'une des extrémités (1b) de l'anneau de maintien (1) forme l'oreille de fermeture (7) par le fait qu'initialement elle comporte une partie (8a), décalée latéralement par rapport au plan de l'anneau en formant une surface de guidage (8) et orientée en oblique vers l'intérieur de l'anneau, en étant recourbée à partir de son extrémité intérieure à peu près radialement vers l'extérieur et selon un angle aigu (14) pour former une partie (8b), puis en étant recourbée latéralement, en formant une ouverture d'oreille (7a), orientée perpendiculairement à la périphérie de l'anneau et pourvue d'une âme d'oreille (9) et en étant fermée par une extrémité de fil (8d), recourbée à son extrémité contre la branche radiale ou partie (8b) (figures 7 à 9).

6. Chaîne de protection anti-dérapage selon la revendication 5, caractérisée en ce que l'extrémité de fil (8d), constituée par exemple par un galet rapporté en caoutchouc ou en matière plastique (8e), a un diamètre qui est supérieur à l'échancrure du crochet de fermeture (6) (figures 7 à 9).

7. Chaîne de protection anti-dérapage selon une des revendications 1 à 3, comportant une fermeture à entonnoir, caractérisée en ce que l'oreille de fermeture (7) est formée à partir de la matière de l'anneau de maintien (1) en direction de la périphérie de l'anneau et est incurvée unitairement perpendiculairement au plan de cet anneau, et en ce que la voie fixe de guidage (8) est formée sur une demi-coquille (20) en forme d'entonnoir, s'accrochant en dessous de l'oreille de fermeture (7) sur toute sa longueur et a un profil montant en forme de parabole depuis l'intérieur de l'anneau de maintien (1) vers sa périphérie jusqu'à l'extrémité (7b) de l'oreille de fermeture (7) (figures 10 à 17).

8. Chaîne de protection anti-dérapage selon la revendication 7, caractérisée en ce que l'oreille de fermeture (7) comporte une branche extrême libre (7') recourbée vers l'arrière parallèlement au plan de l'anneau de maintien (1) sur cet anneau et en ce que la demi-coquille (20) en forme d'entonnoir comporte une fente d'introduction (23) du crochet de fermeture (7) qui est dirigée de l'intérieur de l'anneau de maintien (1) vers l'oreille de fermeture (7) et reçoit une partie (1') de l'anneau de maintien, contre laquelle s'applique parallèlement la branche extrême (7') de l'oreille de fermeture (7), immédiatement en arrière de l'oreille de fermeture (7) dans un manchon de retenue (21), formé unitairement sur la demi-coquille (20) et comportant un trou oblong (22).

9. Chaîne de protection anti-dérapage selon la revendication 7, caractérisée en ce que la branche extrême libre (7') de l'oreille de fermeture (7) fait saillie au-dessus de l'extrémité (24) du manchon de retenue (21) prévu sur la demi-coquille (20) en forme d'entonnoir et est fixée par un plomb de forme annulaire (25) sur l'anneau de maintien (1), qui retient également la demi-coquille (20) sur l'oreille de fermeture (7).

10. Chaîne de protection anti-dérapage selon les revendications 7 à 9, caractérisée en ce que la demi-coquille (20) en forme d'entonnoir est constituée d'une seule pièce en matière plastique ou en métal.

11. Procédé de fabrication de chaînes de protection anti-dérapage selon une ou plusieurs des revendications 7 à 10, caractérisé en ce que sur un anneau de maintien (1) pré-cintré, constitué d'un fil en acier à ressort et pourvu d'une oreille de fermeture (7), est emmanchée une demi-coquille (20) en forme d'entonnoir et comportant un trou oblong (22) jusque contre l'oreille de fermeture (7) de telle sorte qu'elle s'accroche en dessous de l'oreille de fermeture (7) par sa fente d'entrée (23) et qu'elle reçoive la branche extrême libre (7') de l'oreille de fermeture (7) dans son manchon de retenue (21), en ce qu'ensuite la branche extrême libre (7') de l'oreille de fermeture (7) est reliée solidement avec l'anneau de maintien (1) par un plomb de forme annulaire (25), en ce qu'ensuite les parties réticulées de la chaîne sont engagées sur l'anneau de maintien (1) en même temps que des tronçons de flexible ou des douilles d'espacement (5) les maintenant avec un espacement uniforme et sont bloquées sur l'anneau de maintien (1) au moyen d'un plomb (26) placé à une extrémité, et en ce que finalement le crochet de fermeture (6) en forme de U est recourbé radialement vers l'extérieur à l'extrémité (1a) de l'anneau de maintien.

12. Procédé de fabrication de chaînes de protection anti-dérapage selon une ou plusieurs des revendications 7 à 10, caractérisé en ce que sur un anneau de maintien (1) pré-cintré, constitué d'un fil en acier à ressort et pourvu d'une oreille de fermeture (7), est emmanchée une demi-coquille (20) en forme d'entonnoir et comportant un trou oblong (22) jusque contre l'oreille de fermeture (7) de telle sorte qu'elle s'accroche en dessous de l'oreille de fermeture (7) par sa fente d'entrée (23) et qu'elle reçoive la branche extrême libre (7') de l'oreille de fermeture (7) dans son manchon de retenue (21), en ce qu'ensuite la branche extrême libre (7') de l'oreille de fermeture (7) est reliée solidement avec l'anneau de maintien (1) par un plomb de forme annulaire (25), en ce qu'ensuite les tronçons de flexible ou douilles d'espacement (5) maintenant les parties réticulées de la chaîne avec un espacement uniforme sont emmanchés avec un jeu mutuel sur l'anneau de maintien (1) et sont fixés sur cet anneau de maintien (1) par un plomb (26) placé à l'extrémité, en ce qu'ensuite le crochet de fermeture (6) en forme de U est recourbé radialement vers l'extérieur à l'extrémité (1a) de l'anneau de maintien et en ce que finalement les parties réticulées de la chaîne sont accrochées par leurs crochets latéraux (4) dans les volumes intercalaires existant entre les douilles d'espacement (5) et sont fixées par recourbement des extrémités de branches des crochets latéraux (4).

FIG.1

FIG.2

FIG.3

FIG.4

FIG.5

FIG.6

# FIG.7

# FIG.8

# FIG.9

FIG.12   FIG.13

FIG.10

FIG. 11

FIG. 14

FIG.15

FIG.16

XVII

FIG.17